(19) Europäisches Patentamt / European Patent Office / Office européen des brevets

(11) **EP 4 265 824 B1**

(12) **EUROPEAN PATENT SPECIFICATION**

(45) Date of publication and mention
of the grant of the patent:
**07.08.2024 Bulletin 2024/32**

(21) Application number: **22168697.5**

(22) Date of filing: **18.04.2022**

(51) International Patent Classification (IPC):
***C25B 1/04*** *(2021.01)*     ***C25B 9/70*** *(2021.01)*
***C25B 11/077*** *(2021.01)*

(52) Cooperative Patent Classification (CPC):
**C25B 11/077; C25B 1/04; C25B 9/70;
C25B 11/0773**

(54) **AN ELECTRODE FOR OXYGEN GENERATION**

ELEKTRODE ZUR SAUERSTOFFERZEUGUNG

ÉLECTRODE POUR GÉNÉRATION D'OXYGÈNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**25.10.2023 Bulletin 2023/43**

(73) Proprietor: **OÜ Stargate Hydrogen Solutions
10145 Tallinn (EE)**

(72) Inventor: **KÜNGAS, Rainer
10145 Tallinn (EE)**

(74) Representative: **Sarap, Margus
Jalaka 42-23
50109 Tartu (EE)**

(56) References cited:
**CN-A- 106 498 435**     **CN-A- 109 088 077**

• **MA JIAOJIAO ET AL: "Exsolution manipulated
local surface cobalt/iron alloying and dealloying
conversion in La0.95Fe0.8Co0.2O3 perovskite for
oxygen evolution reaction", JOURNAL OF
ALLOYS AND COMPOUNDS, ELSEVIER
SEQUOIA, LAUSANNE, CH, vol. 854, 11
September 2020 (2020-09-11), XP086368775,
ISSN: 0925-8388, [retrieved on 20200911], DOI:
10.1016/J.JALLCOM.2020.157154**
• **POZNYAK S K ET AL: "Behavior of (La,Sr)CoO3
and La2NiO4-based ceramic anodes in alkaline
media: compositional and microstructural
factors", JOURNAL OF SOLID STATE
ELECTROCHEMISTRY ; CURRENT RESEARCH
AND DEVELOPMENT IN SCIENCE AND
TECHNOLOGY, SPRINGER, BERLIN, DE, vol. 12,
no. 1, 13 June 2007 (2007-06-13), pages 15 - 30,
XP019545151, ISSN: 1433-0768, DOI:
10.1007/S10008-007-0353-X**

**Description**

TECHNICAL FIELD

The present invention relates to an electrode for use in electrolysis, in particular, an electrode for use in oxygen generation which is suitably used in the electrolysis of water in alkaline conditions, and which exhibits a low overpotential towards oxygen evolution reaction. The invention relates further to an alkaline electrolysis stack comprising at least one such electrode, as well as a method for the electrolysis of water in alkaline conditions using the alkaline electrolysis stack.

BACKGROUND ART

In alkaline water electrolysis, water is electrochemically converted into hydrogen and oxygen in alkaline conditions: $H_2O = H_2 + 0.5O_2$. An electrolysis cell comprises two electrodes: an anode and a cathode. During operation, an electric potential is applied between the two electrodes, resulting in the flow of electrolysis current through the electrolysis cell. During operation, hydrogen is generated on the cathode according to the hydrogen evolution reaction (HER) : $2H_2O + 2e- = H_2 + 2OH^-$, while oxygen is generated on the anode according to the oxygen evolution reaction (OER) : $2OH^- = 0.5O_2 + H_2O + 2e-$. An alkaline electrolysis cell also comprises an electrolyte, which comprises a liquid alkaline medium such as an aqueous solution of hydroxides and/or carbonates. The electrolysis cell further comprises a porous separator and/or an ion exchange membrane capable of conducting hydroxide ions.

In alkaline water electrolysis, it is desirable to simultaneously minimize the investment cost and the energy consumption of the electrolysis cell. All else being equal, the lower the investment cost and the lower the energy consumption of the cell, the lower the production costs of hydrogen produced via electrolysis. The investment cost of the electrolysis cell is minimized when low-cost materials are used in the electrolysis cell and when such cells are produced using low-cost production methods. The energy consumption of the electrolysis cell is minimized when, for a fixed operating current or current density, the required applied electric potential (voltage) is minimized.

The required applied electric potential is a sum of several contributions and comprises: 1) the theoretical electric potential required to carry out the electrochemical reactions, 2) a potential due to the porous separator and/or ion exchange membrane, 3) an overpotential due to the anode, 4) an overpotential due to the cathode, 5) a potential that is dependent on the distance between the anode and the cathode in the electrolysis cell. Here, the term 'overpotential' refers to the difference between the theoretical and actual applied potential to each electrode, and includes the potential contribution due to e.g., bubble formation. It is known to those skilled in the arts that the overpotential of the anode (i.e., of the OER) is generally higher than the overpotential of the cathode (i.e., of the HER). Therefore, the development of improved electrodes for oxygen generation is highly relevant. In particular, such electrodes should comprise low-cost materials and be produced using low-cost fabrication methods, while exhibiting lower overpotentials towards OER than state-of-the-art electrodes.

In industrial alkaline electrolysis cells, OER electrodes are either based on nickel or precious metals. Nickel-based electrodes are relatively low-cost, but are characterized by high overpotentials, resulting in high energy consumption of the cell, and, in turn, high production cost of hydrogen. In contrast, electrodes based on precious metals or their compounds (such as $IrO_2$, $RuO_2$, Pt) result in low overpotentials, but are very high in investment costs, resulting in high production cost of hydrogen. A third class of alkaline electrolysis OER electrode material has been discovered, which has been shown to exhibit low overpotentials while simultaneously being low-cost. Specifically, ceramic materials with specific crystal structures, such as the perovskite structure, have been shown to be a particularly attractive alternative to both nickel- and precious metal-based OER electrodes.

Examples of such ceramic materials are described in WO 2013/012965 A1, MASSACHUSETTS INST TECHNOLOGY [US], 24.01.2013. An OER catalyst with a formula $A_xA'_{1-x}B_yB'_{1-y}O_{3\pm\delta}$ is provided, where each of A and A', independently, is a rare earth or alkaline earth metal, x is in the range of 0 to 1, each of B and B', independently, is a transition metal, y is in the rate of 0 to 1, and $\delta$ is in the range of 0 to 1. Example materials described in the referenced application include $LaCrO_3$, $LaMnO_3$, $LaFeOs$, $LaCoO_3$, $LaNiO_3$, $LaNi_{0.5}Mn_{0.5}O_3$, $LaCu_{0.5}Mn_{0.5}O_3$, $La_{0.5}Ca_{0.5}MnO_{3-\delta}$, $La_{0.5}Ca_{0.5}FeO_{3-\delta}$, $La_{0.75}Ca_{0.25}FeO_{3-\delta}$, $La_{0.5}Ca_{0.5}CoO_{3-\delta}$, $LaMnO_{3-\delta}$ and $Ba_{0.5}Sr_{0.5}Co_{0.8}Fe_{0.2}O_{3-\delta}$. The number of materials that can be described using the above formula is in practice limitless, and some materials, despite having a composition described as $A_xA'_{1-x}B_yB'_{1-y}O_{3\pm\delta}$, are less suitable for use in alkaline electrolysis cells than others. While the entirety of the formula $A_xA'_{1-x}B_yB'_{1-y}O_{3\pm\delta}$ is claimed, materials wherein the occupancy of the $\sigma$-bonding orbital of $e_g$ symmetry parentage of B, B', or each of B and B', is within a specific range, are claimed to result in high OER activity. More specifically, $Ba_{0.5}Sr_{0.5}Co_{0.8}Fe_{0.2}O_{3-\delta}$ was found to exhibit particularly high OER activity: an OER current of 100 mA/cm$^2$ at an electrode overpotential of 0.4 V in 0.1 M KOH, compared to 18 mA/cm$^2$ for $IrO_2$ and 5 mA/cm$^2$ for $RuO_2$ electrodes under identical conditions.

The main problem with the approach proposed in WO 2013/012965 A1 is the insufficient stability of the claimed materials under conditions used in industrial alkaline water electrolysis cells. The authors of WO 2013/012965 A1 have subsequently shown that under OER in 0.1 M KOH solution, the most electrocatalytically active of the proposed materials, notably $Ba_{0.5}Sr_{0.5}Co_{0.8}Fe_{0.2}O_{3-\delta}$ and $SrCo_{0.8}Fe_{0.2}O_{3-\delta}$ lost their crystal structure, while some other materials, notably $LaCoO_3$, did not (Risch et al., J. Phys. Chem. C, 117 (2013) 8628). Generally, the loss of crystal structure or selective leaching of elements from the material is correlated with lower OER activity (i.e., higher overpotential).

US 2016/0289850 A1, DE NORA TECH INC [US], 6.10.2016 describes the conditions used in industrial alkaline water electrolysis cells: an alkaline electrolyte of 5-30 weight% KOH or NaOH (for example, 25 weight% KOH), pre-heated to 80°C. The industrial conditions are therefore much more challenging from a material stability point of view compared to 1 M KOH solution at room temperature. It is desirable to operate industrial alkaline water electrolysis cells at elevated temperatures (e.g., 80°C) and to use concentrated alkaline solutions (e.g., 25 weight% KOH) in order to lower required applied electric potential. The use of elevated temperatures and high alkali concentrations affects positively not only the anode potential, but also the potential due to the porous separator and/or ion exchange membrane (the conductivity of the separator and/or membrane increases), the overpotential due to the cathode, the potential that is dependent on the distance between the anode and the cathode (the conductivity of the electrolyte increases, resulting in a lower ohmic drop). Therefore, while operating at lower temperatures and less concentrated alkali solutions may, due to stability reasons, be desirable from the perspective of the anode as described in WO 2013/012965 A1, the enhanced performance of the anode will generally not compensate for the performance penalty that the lower temperature and alkali concentration causes in other electrolysis cell components.

Therefore, there is still a need for identifying new ceramic materials which would simultaneously be low-cost, result in low OER overpotentials, and be stable under industrially relevant conditions (i.e., elevated temperature, concentrated alkali solutions).

DISCLOSURE OF INVENTION

The inventor, having a desire to produce low-cost hydrogen via alkaline water electrolysis, has found that the anodes based on ceramic materials described in prior art still have drawbacks. More specifically, the anodes that initially demonstrate lowest OER overpotentials, such as anodes comprising $Ba_{0.5}Sr_{0.5}Co_{0.8}Fe_{0.2}O_{3-\delta}$, deactivate quickly under industrially relevant electrolysis conditions due to insufficient phase stability. On the other hand, the anodes that do not deactivate under industrially relevant electrolysis conditions commonly also demonstrate prohibitively high OER overpotentials. Presently, the search for anode materials that do not deactivate, yet demonstrate low OER overpotentials, is largely based on intuition and trial-and-error approach.

The inventor has found out that a parameter, herein referred to as "stability factor" and abbreviated as SF can successfully predict the phase stability of ceramic materials suitable for alkaline electrolyzer anodes. More specifically, based on the value of SF, the stability of certain ceramic materials in strongly alkaline solutions and their activity towards OER (the activity being inversely proportional to overpotential) can be estimated. This, in turn, makes it possible to distinguish between a) materials that are active, but not phase-stable, b) materials that are phase-stable, but inactive, and c) materials that are simultaneously active and phase-stable. Materials that are active, but not phase-stable have relatively high SF values, while materials that are phase-stable but inactive have relatively low SF values. Materials with intermediate SF values exhibit simultaneously sufficient electrochemical activity (i.e, low electrode overpotentials towards OER) as well as sufficient phase stability.

According to an aspect of the present invention an electrode is provided for carrying out oxygen evolution reaction in the electrolysis of water in alkaline conditions, the electrode comprising a ceramic material $[(A_x)A'_{(1-x)}]_y B_z B'_{(1-z)}O_{3-\delta}$, wherein each of A and A', independently, is a rare earth or alkaline earth metal, x is in the range of 0 to 1, y is A-site occupancy and is in the range of 0.5 to 0.99, each of B and B', independently, is a transition metal, z is in the range of 0 to 1, O is oxygen, and $\delta$ is oxygen non-stoichiometry and is in the range of -1 to 1, and wherein SF of the ceramic material is larger than or equal to 1.67 and smaller than or equal to 2.8.

The electrode also comprises a second material, this second material being metallic Ni, a metallic alloy of Fe and Ni, or a hydroxide of Ni and Fe. An advantage of combining the ceramic material with a second, rather conventional electrode material is that the second material can provide part of the electrochemical activity of the combined electrode. This is particularly important in situations where the electrode is partially poisoned by impurities: if the electrode is made of more than one material, the affinity of these materials towards different impurity species is different, i.e., the extent by which they are affected by impurity adsorption is different. As a result, an electrode comprising more than one material is generally more stable and robust than an electrode comprising a single material. Note that the composition of the second material can refer to either the composition of the material before or after exposure to operating conditions. For example, it is well-known that Fe impurities in the electrolyte can deposit onto the electrodes during operation.

In the context of this invention, "stability factor" or "SF" refers to a parameter that is defined as

$$SF = \frac{r_O \cdot \dfrac{3-\delta}{3}}{r_{B,av}} - n_{A,Av}\left[n_{A,Av} - \frac{r_{A,av}/r_{B,av}}{\ln\left(\dfrac{r_{A,av}}{r_{B,av}}\right)}\right]$$

where $r_O$ is the ionic radius of oxide ion ($O^{2-}$), $r_{B,av}$ is the weighted average ionic radius of B and B', $n_{A,Av}$ is the weighted average oxidation state of A and A', and $r_{A,av}$ is the weighted average ionic radius of A and A'.

The terms "phase stability" and "phase-stable" are meant to refer to the property of a material to retain its crystallographic phase upon exposure to industrially relevant alkaline water electrolysis conditions. One way to evaluate the phase stability of a material or to evaluate whether a material is phase stable is to acquire X-ray diffractograms of the material before and after exposure to industrially relevant alkaline water electrolysis conditions. Phase stability is confirmed in case there are no significant differences in the corresponding X-ray diffractograms, i.e., in case no phase changes in the bulk of the material have taken place. In the context of the present invention, "industrially relevant alkaline water electrolysis conditions" refer to exposure to aqueous solutions of potassium hydroxide that contain more than 20 weight per cent of KOH (20 weight% KOH) at a temperature of 75-85 degrees Celsius, with or without applied electrolysis current. In order to verify phase stability, the exposure time to the aforementioned conditions should be at least 24 hours, and preferably at least 100 hours. Alternative methods for determining phase stability exist, but it is important to note that highly surface-sensitive methods such as X-ray photoelectron spectroscopy or low-energy ion scattering are, in the context of the present invention, not suitable methods for determining phase stability due to the failure of these methods to probe the bulk of the material.

The term "A-site occupancy", denoted as "y" in formulas and equations of the present invention, is meant to refer to the number of A-site cations relative to the number of B-site cations in the ceramic material. For example, for $Ba_{0.5}Sr_{0.5}Co_{0.8}Fe_{0.2}O_{3-\delta}$ (which can also be written as $[Ba_{0.5}Sr_{0.5}]_{1.0}Co_{0.8}Fe_{0.2}O_{3-\delta}$, y = 1.0. In $La_{0.95}CoO_3$ (equivalent to $[La_{1.0}]_{0.95}CoO_3$), y = 0.95. Note that for the purposes of estimating A-site occupancy, the occupancy of the B-site is taken to be equal to unity. For example, to calculate the A-site occupancy of $LaCo_{1.05}O_{3.16}$, the material composition is expressed in such a way that the sub-index of the B-site cation (i.e., Co) is equal to unity, resulting in $La_{0.95}CoO_3$ and hence y = 0.95.

The terms "A-site" and "B-site" are meant to refer to energetically distinct sites in the crystallographic lattice of the ceramic material. Note that although the formula $[(A_x)A'_{(1-x)}]_yB_zB'_{(1-z)}O_{3-\delta}$ generally refers to a material with a perovskite structure ($ABO_3$) or a double perovskite structure ($A_2B_2O_5$), in the context of the present invention, the terms "A-site" and "B-site" are used more broadly and are independent of the crystal structure of the ceramic material.

The term "oxygen non-stochiometry", denoted as "$\delta$" in formulas and equations of the present invention, is meant to refer to the number of oxygen vacancies relative to the number of B-site cations in the ceramic material. For example, for $La_{0.90}Ni_{0.6}Fe_{0.4}O_{2.85}$ (equivalent to $La_{0.90}Ni_{0.6}Fe_{0.4}O_{3-0.15}$), $\delta$ = 0.15. In oxygen excess compounds, $\delta$ has negative values: for example, in $La_{0.3}Sr_{0.7}TiO_{3.15}$ (equivalent to $La_{0.3}Sr_{0.7}TiO_{3+0.15}$), $\delta$ = -0.15. Note that any double perovskite $A_2B_2O_{5+\delta'}$ can be expressed as $ABO_{3-\delta}$ by acknowledging that $\delta'$ = 1-2$\delta$. Oxygen non-stoichiometry is dependent on e.g., temperature, oxygen partial pressure, and applied voltage.

The term "ionic radius" is meant to refer to Shannon ionic radius, as defined in R. D. Shannon, Acta Crystallogr. A, 32 (1976) 751-767. For example, the ionic radius of the oxide anion, $O^{2-}$, with a coordination number of 2 is thereby 1.35 Å. In the context of the present invention, the term "weighted average ionic radius of A and A'" of a ceramic material with a formula $[(A_x)A'_{(1-x)}]_yB_zB'_{(1-z)}O_{3-\delta}$ is meant to refer to the weighted average of the Shannon ionic radii of cations A and A', where the weights are x for the ionic radius of A and (1-x) for the ionic radius of A', and where the resulting radius is multiplied by the A-site occupancy, y. In other words,

$$r_{A,Av} = [x \cdot r_A + (1-x) \cdot r_{A'}] \cdot y,$$

where $r_A$ is the ionic radius of A and $r_{A'}$ is the ionic radius of A'. By analogy,

$$r_{B,Av} = z \cdot r_B + (1-z) \cdot r_{B'}.$$

The term "weighted average oxidation state of A and A'" of a ceramic material with a formula $[(A_x)A'_{(1-x)}]_yB_zB'_{(1-z)}O_{3-\delta}$ is meant to refer to the weighted average of the oxidation state of cations A and A', where the weights are x for the oxidation state of A and (1-x) for the oxidation state of A', multiplied by the A-site occupancy, y. In other words,

$$n_{A,Av} = [x \cdot n_A + (1-x) \cdot n_{A'}] \cdot y,$$

where $n_A$ is the oxidation state of A and $n_{A'}$ is the oxidation state of A'.

The term "alkaline electrolysis stack" is meant to refer to a device comprising more than one alkaline electrolysis cell connected electrically in series. The higher the number of cells in the stack, the more hydrogen and oxygen can be produced in unit time. Similarly, the larger the surface area (foot print) of each cell in the stack, the more hydrogen and oxygen can be produced. The electrodes in the electrolysis cells of the electrolysis stack are separated either by a porous separator (such as Zirfon) and/or an ion exchange membrane capable of conducting hydroxide ions.

The above embodiment of the invention is associated with several important advantages compared to state-of-the-art. Firstly, electrodes of the invention are characterized by sufficient phase-stability, which in turn means that the electrodes do not need to be frequently replaced during operation. Secondly, the electrodes of the invention are sufficiently active, enabling low overpotentials, high efficiencies and thereby low hydrogen production costs. Thirdly, the electrodes of the invention are free of precious metals such as iridium, platinum and ruthenium, which alleviates the issue related to the availability of electrode materials, as well as decreases electrode raw material costs considerably. Fourthly, the electrodes of the invention have lower overpotentials towards the oxygen evolution reaction than conventional nickel-based electrodes. Since electricity costs are a major factor determining the production costs of hydrogen produced by electrolysis, the electrodes of the invention thereby enable hydrogen to be produced at lower costs (OPEX) than conventional nickel-based electrodes.

EP 3 587 622 A1, ASAHI KASEI KABUSHIKI KAISHA [JP], 01.01.2020, describes an anode for water electrolysis comprising a porous substrate, a metal oxide layer containing at least a perovskite-structured metal oxide on or above a part of a surface of or an entire surface of the porous nickel substrate, wherein a content of the perovskite-structured metal oxide in a crystalline constituent in the metal oxide layer is 90% or more and 100% or less. EP 3 587 622 A1 further describes an anode, wherein the perovskite-structured metal oxide is a metal oxide having a composition represented by $A_xA'_{(1-x)}Ni_yB'_{(1-y)}O_{3-z}$, where each of A and A' is an alkali earth metal or rate earth element, B' is one of Cr, Mn, Fe, Co, and Cu, x satisfies $0 \leq x \leq 1$, y satisfies $0 \leq y \leq 1$, and z satisfies $0 \leq z \leq 1$. EP 3 587 622 A1 reports overvoltage values after 100 hours or total operation at 6 kA/m$^2$ and confirms the inferior performance (most likely due to inferior phase-stability) of $Ba_{0.5}Sr_{0.5}Co_{0.8}FeO_3$ compared to $LaNiO_3$. The SF value for $Ba_{0.5}Sr_{0.5}Co_{0.8}FeO_3$ is 3.91, while the SF value of $LaNiO_3$ is 1.62. In other words, $Ba_{0.5}Sr_{0.5}Co_{0.8}FeO_3$ is not phase-stable enough for long-term stability under industrially relevant conditions, whereas $LaNiO_3$ is too inactive towards OER, and the related overpotential can advantageously be further decreased, e.g., by incorporating A-site occupancy of $0.5 \leq y \leq 0.99$. Furthermore, the method of applying the perovskite onto the surface of the nickel substrate is highly labour intensive, requiring 13 application and drying cycles, followed by a calcination cycle.

A publication by Ma et al. in Journal of Alloy and Compounds, 854 (2021) 157154, discloses a series of perovskite oxides: $La_{0.95}FeO_3$, $La_{0.95}Fe_{0.9}Co_{0.1}O_3$, $La_{0.95}Fe_{0.8}Co_{0.2}O_3$, $La_{0.95}Fe_{0.7}Co_{0.3}O_3$, and $La_{0.95}Fe_{0.6}Co_{0.4}O_3$. Of these five materials, Ma *et al.* then disregard $La_{0.95}FeO_3$ and $La_{0.95}Fe_{0.6}Co_{0.4}O_3$ without further explanation and focus on three remaining materials: $La_{0.95}Fe_{0.9}Co_{0.1}O_3$, $La_{0.95}Fe_{0.8}Co_{0.2}O_3$, $La_{0.95}Fe_{0.7}Co_{0.3}O_3$. The authors then subject the three materials to a reduction procedure in order to induce exsolution of Co or Co/Fe nanoparticles, and then evaluate the performance of the resulting materials for OER.

A publication by Poznyak et al. in Journal of Solid State Electrochemistry 12 (2008) 15-30 discloses *inter alia* a series of perovskite materials: $La_{0.3}Sr_{0.7}CoO_{2.924}$, $La_{0.3}Sr_{0.7}Co_{0.8}Al_{0.2}O_{2.85}$, $(La_{0.3}Sr_{0.7})_{0.97}CoO_{2.896}$, $La_{0.5}Sr_{0.5}CoO_3$, $La_{0.55}Sr_{0.45}CoO_3$, $La_{0.65}Sr_{0.35}CoO_3$, $La_{0.7}Sr_{0.3}CoO_3$, $La_2NiO_{4.15}$, $La_2Ni_{0.9}Co_{0.1}O_{4.169}$, $La_2Ni_{0.8}Cu_{0.2}O_{4.124}$. Although some of these materials have the perovskite structure, one material has A-site occupancy less than 1 and some materials have a SF below 2.8, not a single material in the publication simultaneously satisfies all three conditions. Hence the present invention is advantageous over the prior-art reference.

EP 3 444 383 B1, DE NORA PERMELEC LTD [JP], 20.02.2019, describes an anode for alkaline water electrolysis comprising a conductive substrate having at least a surface composed of nickel or a nickel-based alloy, and an electrode catalyst layer formed on the surface of the conductive substrate, wherein a catalyst component that constitutes the electrode catalyst layer comprises: a first catalyst component having a nickel-cobalt spinel oxide represented by a structural formula $NiCo_2O_4$, or a lanthanide-nickel-cobalt perovskite oxide represented by a structural formula $XNi_aCo_{1-a}O_3$ (wherein X represents at least one metal selected from among lanthanides including lanthanum, cerium and praseodymium, and 0<a<1), and a second catalyst component having at least one of iridium oxide and ruthenium oxide, wherein an amount of the second catalyst component, calculated as an amount of a component metal, is at least 0.2 g/m$^2$. The perovskite materials described in EP 3 444 383 B1 generally exhibit very low SF values. For example, for all compositions of $LaNi_aCo_{1-a}O_3$, SF < 1.67: e.g., $LaNi_{0.1}Co_{0.9}O_3$ (SF=1.66), $LaNi_{0.5}Co_{0.5}O_3$ (SF=1.64), $LaNi_{0.9}Co_{0.1}O_3$ (SF=1.63). In other words, the materials chosen here are not optimal for OER: they are "too stable" and more active materials could be obtained by e.g., introducing A-site occupancy in the range from 0.5 to 0.99. Furthermore, the electrode described in EP 3 444 383 B1 still contains significant amounts of iridium and ruthenium oxide to achieve required activity levels. The use of iridium and ruthenium is problematic not only due to the high cost of these elements, but also due to the very limited availability of these elements in the Earth's crust.

In an embodiment according to the present invention, the ceramic material is uniformly dispersed on the surface of the second material. The term "X is uniformly dispersed on the surface of Y" is meant to refer to a situation where the concentration of the particles of X on the surface of Y is the same, no matter which part of the surface of Y is inspected, provided the area of inspection is sufficiently large. "X" refers to, for example, the ceramic material, "Y" refers to, for example, to the second material. In the context of the present invention, the area of inspection is considered sufficiently large, if the area of inspection includes at least 500 particles of X, as identified by e.g., electron microscopy. An advantage of dispersing the ceramic material on the surface of the second material is that an electrode with a uniform electrochemical activity is obtained. Furthermore, since electrochemical reactions on the surface of electrode materials are associated with significant reaction enthalpies, uniform dispersion of the ceramic material helps to avoid "hot spots" (local temperature gradients) in the electrode, which might damage the electrode structure or the separator/membrane.

According to an aspect of the present invention, the particles of the ceramic material are immobilized and partly encapsulated by the second material. In the context of the present invention, the term "X is immobilized" is meant to refer to a situation where the particles of X are unable to detach and move around during electrolyzer operation. Furthermore, the term "X is partly encapsulated by Y" is meant to refer to a situation where the particles of X are in contact with Y from more than one side (partial encapsulation), but not from all sides (complete encapsulation). An advantage of this aspect of the invention is that the ceramic materials are locked strongly in place during operation, thereby avoiding situations where e.g., ceramic particles fall to the bottom of the electrolysis stack due to gravity and cause non-uniform electrode activity or mechanical issues. Partial encapsulation is a particularly effective way of dispersing ceramic material on the surface of the second material, since it ensures that the ceramic material is strongly attached to the surface of the second material, while still being exposed to the electrolyte and thus remaining electrochemically active.

According to an aspect of the present invention, A is an element from the following list of elements: La (lanthanum), Ce (cerium), Gd (gadolinium), Pr (praseodymium), Ba (barium); and A' is an element from the following list of elements: Sr (strontium), Ca (calcium), Ba (barium), Ce (cerium); and B or B', independently, is an element from the following list of elements: Mn (manganese), Ni (nickel), Fe (iron), Co (cobalt), Ti (titanium), Cr (chromium). The advantage of using La, Ce, Gd, Pr, or Ba as A is related to the combination of suitable cation size for $La^{3+}$, $Ce^{3+}$, $Gd^{3+}$, $Pr^{3+}$ and $Ba^{2+}$ in the perovskite lattice, and the availability (price) of these elements. For example, $Dy^{3+}$ and $Eu^{3+}$ would also be suitable from ionic radius point of view, but are too expensive for wide-scale use. An advantage of using Sr, Ca, Ba or Ce as A' is that such elements generally increase the electrical conductivity, as well as oxygen vacancy concentration of the ceramic material. The advantages of using Mn, Ni, Fe, Co, Ti, Cr as B or B' are two-fold: first, the use of transition metals improves the electronic conductivity of the materials due to the many possible oxidation states of the metals, enabling for example the polaron hopping conduction mechanism. Secondly, the use of Mn, Ni, Fe, Co, Ti, or Cr as B or B' over metals such as Ru or Ir as B or B' is advantageous due to the lower cost of Mn, Ni, Fe, Co, Ti, or Cr compared to Ru and Ir.

In an embodiment according to the present invention, A-site occupancy, denoted as y, is in the range of 0.6 to 0.98, and preferably in the range of 0.75 and 0.98. A-site occupancy values below unity (e.g. 0.9) are advantageous, since this results in A-site cations being more strongly bound to the crystal structure. However, when A-site occupancy values are too low (e.g. below 0.6), some of the B-site cations risk no longer being incorporated into the structure of the ceramic material, resulting in some of the B cations forming secondary oxide phases. Best results are obtained when A-site occupancy is within a certain range, such as between 0.6 and 0.98, and preferably between 0.75 and 0.98.

In an embodiment according to the present invention, the average particle size of the ceramic material is between 10 nm and 300 nm and preferably between 20 nm and 200 nm. Generally, the electrochemical and catalytic activity of a material increases when the specific surface area of the material increases. Therefore, it is desirable to maximize the surface area of the ceramic material, i.e., to decrease the average particle size of the material. However, once the particle size becomes too small, for example below 20 nm, material properties begin to change due to a larger fraction of material atoms now occupying edge and corner sites in the particles. This latter phenomenon not only affects the electrochemical activity of the material, but also influences the stability of the material, generally leading to decreased stability. It is therefore desirable that the average particle size of the ceramic material is within an optimal range, such as between 10 nm and 300 nm or between 20 nm and 200 nm.

According to an aspect of the present invention, the ceramic material has a perovskite crystal structure. The perovskite structure is advantageous, since it is a very versatile material class and generally more stable (e.g. less susceptible to A-site cation leaching) than, for example, the corresponding Ruddlesden-Popper phases. Perovskites are generally more electrochemically active than the corresponding spinel phases.

In an embodiment according to the present invention, the electrode overpotential towards oxygen evolution reaction is less than or equal to 400 millivolts at a current density of 1 $mA/cm^2$, when the oxygen evolution reaction is carried out using a rotating disk electrode at a rotation rate of 1500 rpm in 20-35% KOH and at a temperature of 75-85 degrees Celsius. The electrode of the invention is optimized for use under industrial alkaline electrolysis conditions, i.e.,

in 20-35% KOH and at a temperature range between 75°C and 85°C. It is desirable to minimize the electrode overpotential towards oxygen evolution reaction, and at an electrolysis current density of 1 mA/cm$^2$, the overpotential should be less than or equal to 400 mV in order to be at least on par with the performance of state-of-the-art iridium-based electrodes. In a typical rotating disk electrode experiment, the ceramic material is deposited onto the surface of an electrode (e.g., glassy carbon electrode) and immersed into the KOH solution. Electrode performance (overvoltage at different current densities) can then be evaluated at a range of electrode rotation rates to study the effects of kinetic versus mass transport limitations. Ohmic drops can be corrected by additionally carrying out electrochemical impedance spectroscopy measurements.

In an embodiment according to the present invention, the ceramic material is phase-stable for 100 hours in 6 M KOH at 80 degrees Celsius. Typical lifetime of alkaline electrolyzer stacks is approximately 10 years, and all materials used in such stacks need to withstand exposure to operating conditions for the entire lifetime of the stack. However, for the purpose of screening materials for use in alkaline electrolyzers, an exposure time of 100 hours in 6 M KOH at 80°C is often sufficient for evaluating material phase stability. Materials which are not phase-stable after exposure to 100 hours of 6 M KOH at 80°C are not suitable for use as electrode materials.

BRIEF DESCRIPTION OF DRAWINGS

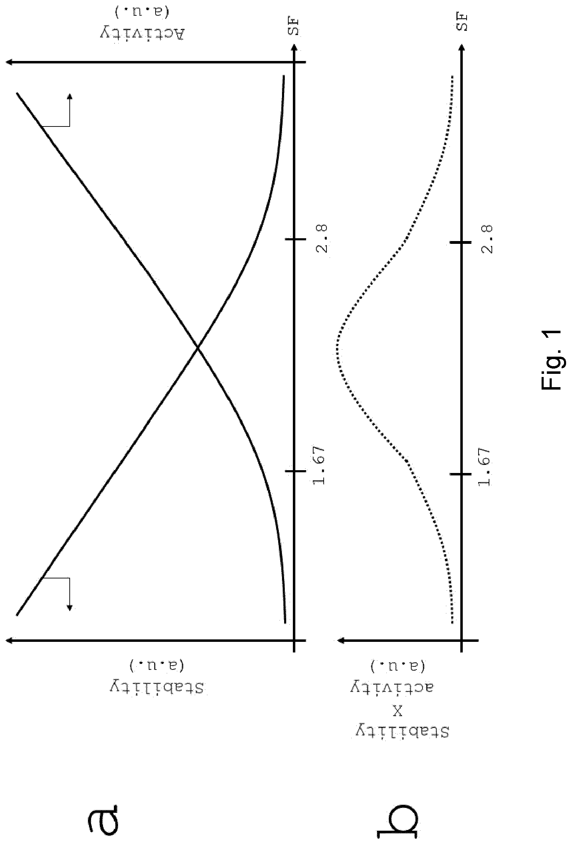

FIG 1 shows stability and activity of ceramic materials as function of the stability factor.

DETAILED DESCRIPTION OF DRAWINGS

FIG 1a shows the qualitative relationship (in arbitrary units) between the phase stability on the left vertical axis titled "Stability (a.u)" and the stability factor ("SF") on the horizontal axis. More specifically, at low SF values, the phase stability of ceramic materials of the formula $[(Ax)A'_{(1-x)}]_y B_z B'_{(1-z)} O_{3-\delta}$ increases, i.e., they are less prone to decomposition and phase change when exposed to electrolysis conditions. At higher SF values, the phase stability of such materials decreases, and at SF>2.8, the materials are no longer phase-stable under industrially relevant electrolysis conditions. Therefore, materials with SF>2.8 are not particularly well suited for use as oxygen electrodes in alkaline electrolysis cells.

Furthermore, FIG 1a also shows the qualitative relationship (in arbitrary units) between the electrochemical activity on the right vertical axis titled "Activity (a.u)" and the stability factor ("SF") on the horizontal axis. More specifically, at high SF values, the electrochemical activity of ceramic materials of the formula $[(Ax)A'_{(1-x)}]_y B_z B'_{(1-z)} O_{3-\delta}$ increases, i.e., overpotential towards OER decreases when these materials are exposed to electrolysis conditions. At lower SF values, the activity of such materials decreases, and at SF<1.67, the materials are no longer active enough under industrially relevant electrolysis conditions. Therefore, materials with SF<1.67 are not particularly well suited for use as oxygen electrodes in alkaline electrolysis cells.

FIG 1b shows the qualitative relationship between a parameter "stability multiplied by activity", in arbitrary units, on the vertical axis and the stability factor ("SF") on the horizontal axis. Optimal material properties, i.e., the combination of high stability and high activity, are obtained when $1.67 \leq SF \leq 2.8$.

BEST MODE(S) FOR CARRYING OUT THE INVENTION

The method is illustrated in more detail in the non-limiting examples that follow.

EXAMPLES

**Example 1 (comparative example)**

In Table 1, a selection of ceramic materials from the barium strontium cobaltite-ferrite family are listed, along with the relevant material properties and SF values. The Shannon ionic radius of $Ba^{2+}$ with a coordination number of 12 is 1.61 Å, while the ionic radius of $Sr^{2+}$ with a coordination number of 9 is 1.31 Å, resulting in $r_{A,av}$ = 1.46 Å. The Shannon ionic radius of $Co^{3+}$ with a coordination number of 6 is 0.545 Å and that of $Fe^{3+}$ with a coordination number of 6 is 0.55 Å. The resulting $r_{B,av}$ values are provided in Table 1. The SF value remains almost constant regardless of the Co:Fe ratio for $(Ba_{0.5}Sr_{0.5})_{1.0}Co_z Fe_{1-z}O_{2.5}$ materials with y=1. For example, $Ba_{0.5}Sr_{0.5}Co_{0.8}Fe_{0.2}O_{2.5}$ with y=1 has an SF value of 3.50, while the SF value for $Ba_{0.5}Sr_{0.5}Co_{0.2}Fe_{0.8}O_3$ is 3.49. In other words, regardless of the chosen Co:Fe ratio in $(Ba_{0.5}Sr_{0.5})_{1.0}Co_z Fe_{1-z}O_3$, the material is predicted not to be phase-stable under conditions relevant for industrial alkaline electrolysis. In good agreement with predictions, $Ba_{0.5}Sr_{0.5}Co_{0.8}Fe_{0.2}O_{3-\delta}$ has shown not to be stable in 0.1 M KOH.

Materials in Table 1 can be synthesized using methods such as (but not limited to) solid state synthesis, co-precipitation, hydrothermal synthesis, sol-gel synthesis, chemical vapor deposition, spray pyrolysis, atmospheric plasma deposition by mixing the metal precursors in desired ratios and optionally treating the resulting mixture to form the correct crystallographic phase. The same methods can be applied for synthesizing materials described also in the examples that follow.

Table 1

| Ceramic material | y | $r_{A,av}$ / Å | $r_{B,av}$ / Å | $n_{A,Av}$ | $\delta$ | $r_o$ (3-$\delta$) /3 | SF |
|---|---|---|---|---|---|---|---|
| $(Ba_{0.5}Sr_{0.5})_{1.0}Co_{0.8}Fe_{0.2}O_{2.5}$ | 1 | 1.46 | 0.546 | 2 | 0.5 | 1.13 | 3.50 |
| $(Ba_{0.5}Sr_{0.5})_{1.0}Co_{0.6}Fe_{0.4}O_{2.5}$ | 1 | 1.46 | 0.547 | 2 | 0.5 | 1.13 | 3.49 |
| $(Ba_{0.5}Sr_{0.5})_{1.0}Co_{0.4}Fe_{0.6}O_{2.5}$ | 1 | 1.46 | 0.548 | 2 | 0.5 | 1.13 | 3.49 |
| $(Ba_{0.5}Sr_{0.5})_{1.0}Co_{0.2}Fe_{0.8}O_{2.5}$ | 1 | 1.46 | 0.549 | 2 | 0.5 | 1.13 | 3.49 |

**Example 2 (comparative example)**

In Table 2, a selection of ceramic materials from the barium strontium cobaltite-ferrite family are listed, along with the relevant material properties and SF values. In Table 2, the A-site occupancy of $(Ba_{0.5}Sr_{0.5})_y Co_{0.8}Fe_{0.2}O_{3-\delta}$ materials is systematically varied in the range $0.7 \leq y \leq 1$. As the value of y decreases, the value of SF increases, i.e. the material becomes less phase-stable. Regardless of the chosen value of y in $(Ba_{0.5}Sr_{0.5})_y Co_{0.8}Fe_{0.2}O_{3-\delta}$, the material is predicted not to be phase-stable under conditions relevant for industrial alkaline electrolysis.

Table 2

| Ceramic material | y | $r_{A,av}$ / Å | $r_{B,av}$ / Å | $n_{A,Av}$ | $\delta$ | $r_o$ (3-$\delta$) /3 | SF |
|---|---|---|---|---|---|---|---|
| $(Ba_{0.5}Sr_{0.5})_{1.0}Co_{0.5}Fe_{0.2}O_{2.5}$ | 1 | 1.46 | 0.546 | 2 | 0.50 | 1.13 | 3.50 |
| $(Ba_{0.5}Sr_{0.5})_{0.9}Co_{0.8}Fe_{0.2}O_{2.44}$ | 0.9 | 1.314 | 0.546 | 1.8 | 0.56 | 1.10 | 3.71 |
| $(Ba_{0.5}Sr_{0.5})_{0.8}Co_{0.8}Fe_{0.2}O_{2.37}$ | 0.8 | 1.168 | 0.546 | 1.6 | 0.63 | 1.07 | 3.90 |
| $(Ba_{0.5}Sr_{0.5})_{0.7}Co_{0.8}Fe_{0.2}O_{2.29}$ | 0.7 | 1.022 | 0.546 | 1.4 | 0.71 | 1.03 | 4.10 |

**Example 3 (comparative example)**

In Table 3, a selection of ceramic materials from the barium strontium cobaltite-ferrite family are listed, along with the relevant material properties and SF values. In Table 3, the Ba:Sr ratio, x, of $(Ba_x Sr_{1-x})_{1.0}Co_{0.8}Fe_{0.2}O_{2.5}$ materials is systematically varied in the range $0.1 \leq x \leq 0.9$. Regardless of the chosen value of x in $(Ba_x Sr_{1-x})_{1.0}Co_{0.8}Fe_{0.2}O_{2.5}$, the material is predicted not to be phase-stable under conditions relevant for industrial alkaline electrolysis.

Table 3

| Ceramic material | y | $r_{A,av}$ / Å | $r_{B,av}$ / Å | $n_{A,Av}$ | $\delta$ | $r_o$ (3-$\delta$) /3 | SF |
|---|---|---|---|---|---|---|---|
| $(Ba_{0.9}Sr_{0.1})_{1.0}Co_{0.8}Fe_{0.2}O_{2.5}$ | 1 | 1.58 | 0.546 | 2 | 0.5 | 1.13 | 3.51 |
| $(Ba_{0.8}Sr_{0.2})_{1.0}Co_{0.8}Fe_{0.2}O_{2.5}$ | 1 | 1.55 | 0.546 | 2 | 0.5 | 1.13 | 3.50 |
| $Ba_{0.7}Sr_{0.3})_{1.0}Co_{0.8}Fe_{0.2}O_{2.5}$ | 1 | 1.52 | 0.546 | 2 | 0.5 | 1.13 | 3.50 |
| $Ba_{0.6}Sr_{0.4})_{1.0}Co_{0.8}Fe_{0.2}O_{2.5}$ | 1 | 1.49 | 0.546 | 2 | 0.5 | 1.13 | 3.50 |
| $Ba_{0.5}Sr_{0.5})_{1.0}Co_{0.8}Fe_{0.2}O_{2.5}$ | 1 | 1.46 | 0.546 | 2 | 0.5 | 1.13 | 3.50 |
| $(Ba_{0.4}Sr_{0.6})_{1.0}Co_{0.8}Fe_{0.2}O_{2.5}$ | 1 | 1.43 | 0.546 | 2 | 0.5 | 1.13 | 3.50 |
| $(Ba_{0.3}Sr_{0.7})_{1.0}Co_{0.8}Fe_{0.2}O_{2.5}$ | 1 | 1.4 | 0.546 | 2 | 0.5 | 1.13 | 3.51 |
| $(Ba_{0.2}Sr_{0.8})_{1.0}Co_{0.8}Fe_{0.2}O_{2.5}$ | 1 | 1.37 | 0.546 | 2 | 0.5 | 1.13 | 3.52 |
| $(Ba_{0.1}Sr_{0.9})_{1.0}Co_{0.8}Fe_{0.2}O_{2.5}$ | 1 | 1.34 | 0.546 | 2 | 0.5 | 1.13 | 3.53 |

**Example 4 (comparative example)**

In Table 4, a selection of ceramic materials from the family $(A_{0.5}Sr_{0.5})_{1.0}Co_{0.8}Fe_{0.2}O_3$ are listed, along with the relevant material properties and SF values. In Table 4, one of the A-site cations, A in $(A_{0.5}Sr_{0.5})_{1.0}Co_{0.8}Fe_{0.2}O_{3-\delta}$ is systematically varied, with A selected from $Ba^{2+}$, $Ce^{3+}$, $Gd^{3+}$, $Pr^{3+}$, and $La^{3+}$. The Shannon ionic radius of $Ba^{2+}$ with a coordination number of 12 is 1.61 Å, while the ionic radius of $Sr^{2+}$ with a coordination number of 9 is 1.31 Å, resulting in $r_{A,av}$ = 1.46 Å for $(Ba_{0.5}Sr_{0.5})_{1.0}Co_{0.8}Fe_{0.2}O_{2.5}$. The Shannon ionic radius for $La^{3+}$ with a coordination number of 12 is 1.36 Å, resulting in $r_{A,av}$ = 1.335 Å for $(La_{0.5}Sr_{0.5})_{1.0}Co_{0.8}Fe_{0.2}O_{2.75}$. The Shannon ionic radii for $Ce^{3+}$ (12-coordinated), $Pr^{3+}$ (9-coordinated), and $Gd^{3+}$ (8-coordinated) is 1.34 Å, 1.18 Å and 1.05 Å, respectively. The SF values for $(Gd_{0.5}Sr_{0.5})_{1.0}Co_{0.8}Fe_{0.2}O_{2.75}$, $(Pr_{0.5}Sr_{0.5})_{1.0}Co_{0.8}Fe_{0.2}O_{2.75}$, $(La_{0.5}Sr_{0.5})_{1.0}Co_{0.8}Fe_{0.2}O_{2.75}$, and $(Ce_{0.5}Sr_{0.5})_{1.0}Co_{0.8}Fe_{0.2}O_{2.75}$, are all below 3.1, while SF=3.5 for $(Ba_{0.5}Sr_{0.5})_{1.0}Co_{0.8}Fe_{0.2}O_{2.5}$.

Accordingly, the materials $(A_{0.5}Sr_{0.5})_{1.0}Co_{0.8}Fe_{0.2}O_{3-\delta}$, where A=Ce, Gd, Pr, and La are expected to be more phase-stable than material where A=Ba, but none of the materials are phase-stable enough for use in industrial alkaline electrolyzers.

Table 4

| Ceramic material | y | $r_{A,av}$ / Å | $r_{B,av}$ / Å | $n_{A,Av}$ | $\delta$ | $r_o(3-\delta)$ /3 | SF |
|---|---|---|---|---|---|---|---|
| $(Ba_{0.5}Sr_{0.5})_{1.0}Co_{0.8}Fe_{0.2}O_{2.5}$ | 1 | 1.46 | 0.546 | 2 | 0.5 | 1.13 | 3.50 |
| $(Gd_{0.5}Sr_{0.5})_{1.0}Co_{0.8}Fe_{0.2}O_{2.75}$ | 1 | 1.1815 | 0.546 | 2.5 | 0.25 | 1.24 | 3.02 |
| $(Pr_{0.5}Sr_{0.5})_{1.0}Co_{0.8}Fe_{0.2}O_{2.75}$ | 1 | 1.2445 | 0.546 | 2.5 | 0.25 | 1.24 | 2.93 |
| $(La_{0.5}Sr_{0.5})_{1.0}Co_{0.8}Fe_{0.2}O_{2.75}$ | 1 | 1.335 | 0.546 | 2.5 | 0.25 | 1.24 | 2.85 |
| $(Ce_{0.5}Sr_{0.5})_{1.0}Co_{0.8}Fe_{0.2}O_{2.75}$ | 1 | 1.325 | 0.546 | 2.5 | 0.25 | 1.24 | 2.86 |

**Example 5**

In Table 5, a selection of ceramic materials from the gadolinium strontium cobaltite-ferrite family are listed, along with the relevant material properties and SF values. In Table 5, the Gd:Sr ratio, x, of $(Gd_xSr_{1-x})_{0.97}Co_{0.8}Fe_{0.2}O_{3-\delta}$ materials is systematically varied in the range $0.1 \leq x \leq 0.9$. In contrast to the comparative example of Example 3, the two A-site cations carry a different positive charge ($Gd^{3+}$, $Sr^{2+}$), which results in better phase stability at high Gd contents: materials where x < 0.2 have SF values below 2.8 and are thus predicted to be phase-stable under conditions relevant for industrial alkaline electrolysis. Materials in Table 5 with $0.2 \leq x \leq 1$ are not phase-stable.

Table 5

| Ceramic material | y | $r_{A,av}$ / Å | $r_{B,av}$ / Å | $n_{A,Av}$ | $\delta$ | $r_o(3-\delta)$ /3 | SF |
|---|---|---|---|---|---|---|---|
| $(Gd_{0.9}Sr_{0.1})_{0.97}Co_{0.8}Fe_{0.2}O_{2.91}$ | 0.97 | 1.046 | 0.546 | 2.813 | 0.0935 | 1.31 | 2.77 |
| $(Gd_{0.8}Sr_{0.2})_{0.97}Co_{0.8}Fe_{0.2}O_{2.86}$ | 0.97 | 1.071 | 0.546 | 2.716 | 0.142 | 1.29 | 2.89 |
| $(Gd_{0.7}Sr_{0.3})_{0.97}Co_{0.8}Fe_{0.2}O_{2.81}$ | 0.97 | 1.096 | 0.546 | 2.619 | 0.1905 | 1.26 | 3.00 |
| $(Gd_{0.6}Sr_{0.4})_{0.97}Co_{0.8}Fe_{0.2}O_{2.76}$ | 0.97 | 1.121 | 0.546 | 2.522 | 0.239 | 1.24 | 3.11 |
| $(Gd_{0.5}Sr_{0.5})_{0.97}Co_{0.8}Fe_{0.2}O_{2.71}$ | 0.97 | 1.146 | 0.546 | 2.425 | 0.2875 | 1.22 | 3.22 |
| $(Gd_{0.4}Sr_{0.6})_{0.97}Co_{0.8}Fe_{0.2}O_{2.66}$ | 0.97 | 1.171 | 0.546 | 2.328 | 0.336 | 1.20 | 3.32 |
| $(Gd_{0.3}Sr_{0.7})_{0.97}Co_{0.8}Fe_{0.2}O_{2.62}$ | 0.97 | 1.196 | 0.546 | 2.231 | 0.3845 | 1.18 | 3.41 |
| $(Gd_{0.2}Sr_{0.8})_{0.97}Co_{0.8}Fe_{0.2}O_{2.57}$ | 0.97 | 1.221 | 0.546 | 2.134 | 0.433 | 1.16 | 3.49 |
| $(Gd_{0.1}Sr_{0.9})_{0.97}Co_{0.8}Fe_{0.2}O_{2.52}$ | 0.97 | 1.246 | 0.546 | 2.037 | 0.4815 | 1.13 | 3.56 |

**Example 6**

In Table 6, a selection of ceramic materials from the family $(La_{0.6}A'_{0.4})_{0.99}Co_{0.8}Fe_{0.2}O_{3-\delta}$ are listed, along with the relevant material properties and SF values. The Shannon ionic radius of $Ca^{2+}$ with a coordination number of 12 is 1.34 Å, while the ionic radius of $Sr^{2+}$ with a coordination number of 9 is 1.31 Å. The ionic radius of $Ba^{2+}$ with a coordination number of 12 is 1.61 Å and the ionic radius of $Ce^{3+}$ with a coordination number of 12 is 1.34 Å. In Table 6, one of the A-site cations, A' in $(La_{0.6}A'_{0.4})_{0.99}Co_{0.8}Fe_{0.2}O_3$ is systematically varied, with A' selected from $Sr^{2+}$, $Ca^{2+}$, $Ba^{2+}$ and $Ce^{3+}$. The SF values for all materials in Table 6 are within the range $1.67 \leq SF \leq 2.8$, but none of the SF values are within the range $1.9 \leq SF \leq 2.6$.

Table 6

| Ceramic material | y | $r_{A,av}$ / Å | $r_{B,av}$ / Å | $n_{A,Av}$ | $\delta$ | $r_o(3-\delta)$ /3 | SF |
|---|---|---|---|---|---|---|---|
| $(La_{0.6}Sr_{0.4})_{0.99}Co_{0.8}Fe_{0.2}O_{2.79}$ | 0.99 | 1.3266 | 0.546 | 2.574 | 0.213 | 1.25 | 2.72 |
| $(La_{0.6}Ca_{0.4})_{0.99}Co_{0.8}Fe_{0.2}O_{2.79}$ | 0.99 | 1.33848 | 0.546 | 2.574 | 0.213 | 1.25 | 2.71 |
| $(La_{0.6}Ba_{0.4})_{0.99}Co_{0.8}Fe_{0.2}O_{2.79}$ | 0.99 | 1.4454 | 0.546 | 2.574 | 0.213 | 1.25 | 2.67 |
| $(La_{0.6}Ba_{0.4})_{0.99}Co_{0.8}Fe_{0.2}O_{2.78}$ | 0.99 | 1.33848 | 0.546 | 2.97 | 0.015 | 1.34 | 1.76 |

## Example 7

In Table 7, a selection of ceramic materials from the family $(La_{0.9}Sr_{0.1})_{0.97}BO_{3-\delta}$ are listed, along with the relevant material properties and SF values. In Table 7, the B-site cation, B' in $(La_{0.9}Sr_{0.1})_{0.97}BO_{3-\delta}$ is systematically varied, with B selected from Mn, Ni, Fe, Co, Ti, and Cr. The average oxidation state of Mn, Ni, Fe, Co, and Cr ions is assumed to be 3.1. An exception here is Ti, which is present as $Ti^{4+}$ (6-coordinated) with an ionic radius of 0.605 Å, resulting in $\delta$=-0.455. The ionic radius of $Co^{3+}$, $Co^{4+}$, $Fe^{3+}$, $Fe^{4+}$, $Mn^{3+}$, $Mn^{4+}$, $Ni^{3+}$, $Ni^{4+}$, $Cr^{3+}$, and $Cr^{4+}$ (all with a coordination number of 6) is 0.545 Å, 0.53 Å, 0.55 Å, 0.585 Å, 0.58 Å, 0.53 Å, 0.56 Å, 0.48 Å, 0.615 Å, 0.55 A, respectively. For all materials in Table 7, $1.67 \leq SF \leq 2.8$.

Table 7

| Ceramic material | y | $r_{A,av}$ / Å | $r_{B,av}$ / Å | $n_{A,Av}$ | $\delta$ | $r_o(3-\delta)$ /3 | SF |
|---|---|---|---|---|---|---|---|
| $(La_{0.9}Sr_{0.1})_{0.97}CoO_{2.96}$ | 0.97 | 1.31435 | 0.5435 | 2.813 | 0.0435 | 1.33 | 2.24 |
| $(La_{0.9}Sr_{0.1})_{0.97}FeO_{2.96}$ | 0.97 | 1.31435 | 0.5535 | 2.813 | 0.0435 | 1.33 | 2.21 |
| $(La_{0.9}Sr_{0.1})_{0.97}MnO_{2.96}$ | 0.97 | 1.31435 | 0.575 | 2.813 | 0.0435 | 1.33 | 2.18 |
| $(La_{0.9}Sr_{0.1})_{0.97}TiO_{3.41}$ | 0.97 | 1.31435 | 0.605 | 2.813 | -0.407 | 1.53 | 2.50 |
| $(La_{0.9}Sr_{0.1})_{0.97}NiO_{2.96}$ | 0.97 | 1.31435 | 0.552 | 2.813 | 0.0435 | 1.33 | 2.22 |
| $(La_{0.9}Sr_{0.1})_{0.97}CoO_{2.96}$ | 0.97 | 1.31435 | 0.6085 | 2.813 | 0.0435 | 1.33 | 2.16 |

## Example 8

In Table 8, a selection of ceramic materials from the family $(La_{0.9}Sr_{0.1})_yBO_{3\pm\delta}$ are listed, along with the relevant material properties and SF values. In Table 8, the B-site cation, B' in $(La_{0.9}Sr_{0.1})_yBO_{3\pm\delta}$ is systematically varied, with B selected from Mn, Ni, Fe, Co, Ti, and Cr and $0.65 \leq y \leq 0.95$. The average charge of Mn, Ni, Fe, Co, and Cr ions is assumed to be 3.1, while Ti is assumed to be present as $Ti^{4+}$. Comparing SF values in Table 8 to SF values in Table 7, it is apparent that decreasing the A-site occupancy of ceramic materials systematically increases the SF values, i.e., by varying y, the activity as well as phase stability of the materials can be tailored. Some materials, such as $(La_{0.9}Sr_{0.1})_{0.90}TiO_{3.31}$, $(La_{0.9}Sr_{0.1})_{0.8}TiO_{3.16}$, $(La_{0.9}Sr_{0.1})_{0.65}TiO_{2.94}$, and $(La_{0.9}Sr_{0.1})_{0.90}CrO_{2.86}$ become too unstable (SF > 2.8), while others, such remain phase-stable ($1.67 \leq SF \leq 2.8$).

Table 8

| Ceramic material | y | $r_{A,av}$ / Å | $r_{B,av}$ / Å | $n_{A,Av}$ | $\delta$ | $r_o(3-\delta)$ /3 | SF |
|---|---|---|---|---|---|---|---|
| $(La_{0.9}Sr_{0.1})_{0.95}CoO_{2.93}$ | 0.95 | 1.28725 | 0.5435 | 2.755 | 0.0725 | 1.32 | 2.40 |
| $(La_{0.9}Sr_{0.1})_{0.90}CoO_{2.86}$ | 0.9 | 1.2195 | 0.5435 | 2.61 | 0.145 | 1.28 | 2.80 |

(continued)

| Ceramic material | y | $r_{A,av}$ / Å | $r_{B,av}$ / Å | $n_{A,Av}$ | $\delta$ | $r_o(3-\delta)$ /3 | SF |
|---|---|---|---|---|---|---|---|
| $(La_{0.9}Sr_{0.1})_{0.95}FeO_{2.93}$ | 0.95 | 1.28725 | 0.5535 | 2.755 | 0.0725 | 1.32 | 2.38 |
| $(La_{0.9}Sr_{0.1})_{0.90}FeO_{2.86}$ | 0.9 | 1.2195 | 0.5535 | 2.61 | 0.145 | 1.28 | 2.79 |
| $(La_{0.9}Sr_{0.1})_{0.95}MnO_{2.93}$ | 0.95 | 1.28725 | 0.575 | 2.755 | 0.0725 | 1.32 | 2.35 |
| $(La_{0.9}Sr_{0.1})_{0.90}MnO_{2.86}$ | 0.9 | 1.2195 | 0.575 | 2.61 | 0.145 | 1.28 | 2.78 |
| $(La_{0.9}Sr_{0.1})_{0.95}TiO_{3.38}$ | 0.95 | 1.28725 | 0.605 | 2.755 | -0.378 | 1.52 | 2.69 |
| $(La_{0.9}Sr_{0.1})_{0.90}TiO_{3.31}$ | 0.9 | 1.2195 | 0.605 | 2.61 | -0.305 | 1.49 | 3.15 |
| $(La_{0.9}Sr_{0.1})_{0.80}TiO_{3.16}$ | 0.8 | 1.084 | 0.605 | 2.32 | -0.16 | 1.42 | 4.10 |
| $(La_{0.9}Sr_{0.1})_{0.65}TiO_{2.94}$ | 0.65 | 0.88075 | 0.605 | 1.885 | 0.0575 | 1.32 | 5.94 |
| $(La_{0.9}Sr_{0.1})_{0.95}NiO_{2.93}$ | 0.95 | 1.28725 | 0.552 | 2.755 | 0.0725 | 1.32 | 2.38 |
| $(La_{0.9}Sr_{0.1})_{0.90}NiO_{2.86}$ | 0.9 | 1.2195 | 0.552 | 2.61 | 0.145 | 1.28 | 2.79 |
| $(La_{0.9}Sr_{0.1})_{0.95}CrO_{2.93}$ | 0.95 | 1.28725 | 0.6085 | 2.755 | 0.0725 | 1.32 | 2.35 |
| $(La_{0.9}Sr_{0.1})_{0.90}CrO_{2.86}$ | 0.9 | 1.2195 | 0.6085 | 2.61 | 0.145 | 1.28 | 2.82 |

**Example 9**

In Table 9, a selection of ceramic materials from the lanthanum nickelate-ferrite family are listed, along with the relevant material properties and SF values. For example, $LaNi_{0.6}Fe_{0.4}O_3$ with y=1 has an SF value of 1.63, while $La_{0.95}Ni_{0.6}Fe_{0.4}O_{2.925}$ with y=0.95 has an SF value of 2.10. The SF value for $La_{0.90}Ni_{0.6}Fe_{0.4}O_{2.85}$ is 2.55, and the SF values for materials in Table 9 with y $\leq$ 0.85 are above 2.8. $LaNi_{0.6}Fe_{0.4}O_3$ (y=1) is phase-stable when exposed to 6 M KOH at 80°C, whereas materials in Table 9 with y $\leq$ 0.85 are not. For the more extreme cases, e.g., $La_{0.5}Ni_{0.6}Fe_{0.4}O_{2.25}$, the ceramic material does not form the perovskite structure and a multi-phase and multi-component material is present even before exposure to industrial alkaline electrolysis conditions. In the other extreme, $LaNi_{0.6}Fe_{0.4}O_3$ with y=1 with an SF value of 1.63 is not active enough towards the oxygen evolution reaction based on the very low SF value.

Table 9

| Ceramic material | y | $r_{A,av}$ / Å | $r_{B,av}$ / Å | $n_{A,Av}$ | $\delta$ | $r_o (3-\delta)$ /3 | SF |
|---|---|---|---|---|---|---|---|
| $LaNi_{0.6}Fe_{0.4}O_3$ | 1 | 1.36 | 0.556 | 3 | 0 | 1.35 | 1.63 |
| $La_{0.95}Ni_{0.6}Fe_{0.4}O_{2.925}$ | 0.95 | 1.292 | 0.556 | 2.85 | 0.075 | 1.32 | 2.10 |
| $La_{0.90}Ni_{0.6}Fe_{0.4}O_{2.85}$ | 0.9 | 1.224 | 0.556 | 2.7 | 0.15 | 1.28 | 2.55 |
| $La_{0.85}Ni_{0.6}Fe_{0.4}O_{2.775}$ | 0.85 | 1.156 | 0.556 | 2.55 | 0.225 | 1.25 | 2.99 |
| $La_{0.80}Ni_{0.6}Fe_{0.4}O_{2.7}$ | 0.8 | 1.088 | 0.556 | 2.4 | 0.3 | 1.22 | 3.42 |
| $La_{0.75}Ni_{0.6}Fe_{0.4}O_{2.625}$ | 0.75 | 1.02 | 0.556 | 2.25 | 0.375 | 1.18 | 3.86 |
| $La_{0.70}Ni_{0.6}Fe_{0.4}O_{2.55}$ | 0.7 | 0.952 | 0.556 | 2.1 | 0.45 | 1.15 | 4.34 |
| $La_{0.65}Ni_{0.6}Fe_{0.4}O_{2.475}$ | 0.65 | 0.884 | 0.556 | 1.95 | 0.525 | 1.11 | 4.89 |
| $La_{0.60}Ni_{0.6}Fe_{0.4}O_{2.4}$ | 0.6 | 0.816 | 0.556 | 1.8 | 0.6 | 1.08 | 5.59 |
| $La_{0.55}Ni_{0.6}Fe_{0.4}O_{2.325}$ | 0.55 | 0.748 | 0.556 | 1.65 | 0.675 | 1.05 | 6.64 |
| $La_{0.5}Ni_{0.6}Fe_{0.4}O_{2.25}$ | 0.5 | 0.68 | 0.556 | 1.5 | 0.75 | 1.01 | 8.68 |

**Example 10**

$La_{0.95}CoO_{2.925}$, $Pr_{0.95}CoO_{2.925}$, $Gd_{0.95}CoO_{2.925}$, $(La_{0.9}Sr_{0.1})_{0.95}CoO_{2.878}$, $La_{0.95}NiO_{2.925}$, $LaFeO_{2.925}$, $La_{0.95}Ni_{0.6}Co_{0.4}O_{2.925}$, and $La_{0.95}Ni_{0.6}Fe_{0.4}O_{2.925}$ were synthesized using a modified sol-gel synthesis route. The resulting materials were calcined to 800°C for 3 hours to obtain oxide catalyst materials with perovskite structure as verified by X-ray diffraction measurements. The material properties and SF values are summarized in Table 10.

Table 10

| Ceramic material | y | $r_{A,av}$ / Å | $r_{B,av}$ / Å | $n_{A,Av}$ | $\delta$ | $r_o$ (3-$\delta$) /3 | SF |
|---|---|---|---|---|---|---|---|
| $Gd_{0.95}CoO_{2.925}$ | 0.95 | 1.000 | 0.545 | 2.85 | 0.075 | 1.32 | 2.91 |
| $La_{0.95}Ni_{0.6}Fe_{0.4}O_{2.925}$ | 0.95 | 1.292 | 0.556 | 2.85 | 0.075 | 1.32 | 2.10 |
| $LaFeO_3$ | 0.95 | 1.36 | 0.55 | 3 | 0 | 1.35 | 1.65 |

The calcined materials were characterized electrochemically in a rotating disk electrode (RDE) setup. For these measurements, each perovskite material was mixed with Nafion solution, isopropanol and ultrapure water to obtain a slurry. The slurry was coated onto glassy carbon electrodes at a loading of 0.2 mg/cm$^2$. The electrodes were tested in a three-electrode setup in 0.1 M KOH saturated with argon. OER kinetics were evaluated by applying a linearly changing potential to the electrode and measuring the resulting current. The potential was swept from 1.3 V to 1.9 V and back to 1.3 V vs RHE. The electrode was rotated at 1500 rpm, and the measurements were carried out at room temperature.

Furthermore, the materials were subjected to a strong alkali treatment to evaluate phase stability. Each material was treated in 6 M KOH for 100-120 hours at a temperature of 80 degrees C. After the treatment, the material was rinsed thoroughly with distilled water, dried and the crystallographic structure of the materials was studied with x-ray diffraction (XRD).

Specifically, the calcined $Gd_{0.95}CoO_{2.925}$ material was found to consist primarily of a perovskite material, with the main XRD peaks (in the order of decreasing intensity) at 33.86°, 34.36°, and 33.20° 2-theta. The calcined material was highly active electrochemically: the potential required to reach an OER current of 10 mA/cm$^2$ was 1.67 V. As expected from the high SF value (SF>2.8), the material proved not to be phase stable after the treatment in 6M KOH. The main XRD peaks had changed to (in the order of decreasing intensity) 28.19°, 50.70°, 41.25°, and 29.52° 2-theta, indicating that the original perovskite material had decomposed. The KOH-treated material was found to be significantly less active in RDE measurements (1.73 V to reach OER current of 10 mA/cm$^2$). $Gd_{0.95}CoO_{2.925}$ is an example of a material that is initially electrochemically very active, but insufficiently phase-stable in industrially relevant alkaline electrolysis conditions.

The calcined $La_{0.95}Ni_{0.6}Fe_{0.4}O_{2.925}$ material was found to consist primarily of a perovskite material, with the main XRD peaks (in the order of decreasing intensity) at 32.56°, 32.84°, and 46.94° 2-theta. The calcined material was active electrochemically: the potential required to reach an OER current of 10 mA/cm$^2$ was 1.66 V. As expected from the SF value (1.67 $\leq$ SF $\leq$ 2.8), the material proved to be phase stable after the treatment in 6M KOH. The main XRD peaks did not change: (in the order of decreasing intensity) 32.60°, 32.80°, and 46.98° 2-theta, indicating that the original perovskite material remained stable under treatment conditions. The KOH-treated material was found to be somewhat less active in RDE measurements, but the activity was withing acceptable limits (1.72 V to reach OER current of 10 mA/cm$^2$). $La_{0.95}Ni_{0.6}Fe_{0.4}O_{2.925}$ is an example of a material that offers good compromise between electrochemical activity and sufficient phase-stability in industrially relevant alkaline electrolysis conditions.

The calcined $LaFeO_3$ material was found to consist primarily of a perovskite material, with the main XRD peaks (in the order of decreasing intensity) at 33.16°, 57.40°, and 46.16° 2-theta. The calcined material was highly inactive electrochemically: the material did not reach an OER current of 10 mA/cm$^2$ when the potential was increased to 1.9 V, with the current density at 1.9 V being equal to only 3.5 mA/cm$^2$. As expected from the low SF value (SF<1.67), the material proved to be phase stable after the treatment in 6M KOH. The main XRD peaks did not change, indicating that the original perovskite material had decomposed. $LaFeO_3$ is an example of a material that is highly stable, but insufficiently active for OER in industrially relevant alkaline electrolysis conditions.

An electrode suitable for carrying out oxygen evolution reaction in the electrolysis of water in alkaline conditions can be designed according to the following steps:

1) Pre-select a ceramic material with a formula $[(A_x)A'_{(1-x)}]_yB_zB'_{(1-z)}O_{3-\delta}$, for example $LaNi_{0.6}Fe_{0.4}O_3$.

2) Based on the ionic radii, oxidation state values, A-site occupancy (y), oxygen non-stoichiometry ($\delta$), and A- and B-site doping levels (x and z, respectively), and using the formula for the calculation of SF, estimate the value of SF. For example, SF for $LaNi_{0.6}Fe_{0.4}O_3$ is 1.63.

3) If SF is within suitable range (1.67 $\leq$ SF $\leq$ 2.8), synthesize the material according to the methods listed (but not limited to) in Example 1 and select the ceramic material for further testing, for example by exposing the material for 100 hours to 6 M KOH at 80 degrees Celsius to verify phase-stability. For example, $LaNi_{0.6}Fe_{0.4}O_3$ would not be selected for further testing due to SF < 1.67.

4) In case SF is outside the suitable range, vary the value for y within the range 0.5 to 0.99, and preferably within the range 0.6 to 0.98 to change the SF value. For example, by altering the value of y from 1.0 to 0.95 (from $LaNi_{0.6}Fe_{0.4}O_3$ to $La_{0.95}Ni_{0.6}Fe_{0.4}O_{2.925}$), the SF value can be increased to 2.1, thereby satisfying the condition of $1.67 \leq SF \leq 2.8$.

5) Alternatively to step 4, SF value can be altered by varying the value for x and/or z. For example, by altering the value of z from 0.6 to 0.1 (from $LaNi_{0.6}Fe_{0.4}O_3$ to $LaNi_{0.1}Fe_{0.9}O_3$), the SF value can be increased from 1.63 to 1.65.

6) Alternatively to steps 4 or 5, SF value can be altered by varying the elemental composition of the ceramic material. For example, by replacing Fe with Co, i.e, changing the composition of the material from $LaNi_{0.6}Fe_{0.4}O_3$ to $LaNi_{0.6}Co_{0.4}O_3$, the SF value can be increased from 1.63 to 1.64.

7) Steps 4, 5, and 6 can be advantageously combined. For example, the SF value of $LaNi_{0.6}Co_{0.4}O_3$ can be increased from 1.64 to 2.04 by decreasing y from 1 to 0.95, i.e., $La_{0.95}Ni_{0.6}Co_{0.4}O_{2.85}$, thereby satisfying the condition of $1.67 \leq SF \leq 2.8$.

**Claims**

1. An electrode suitable for carrying out oxygen evolution reaction in the electrolysis of water in alkaline conditions, the electrode comprising

   a. a ceramic material of formula (I)

   $$[(A_x)A'_{(1-x)}]_y B_z B'_{(1-z)}O_{3-\delta} \qquad (I)$$

   where each of A and A', independently, is a rare earth or alkaline earth metal, x is in the range of 0 to 1, y is A-site occupancy and is in the range of 0.5 to 0.99, each of B and B', independently, is a transition metal, z is in the range of 0 to 1, O is oxygen, and $\delta$ is oxygen non-stoichiometry and is in the range of -1 to 1, and
   b. a second material being a metallic Ni, a metallic alloy of Fe and Ni, or a hydroxide of Ni and Fe;
   wherein stability factor (SF) of the ceramic material is defined in formula (II),

   $$SF = \frac{r_O \cdot \frac{3-\delta}{3}}{r_{B,av}} - n_{A,Av}\left[n_{A,Av} - \frac{r_{A,av}/r_{B,av}}{\ln\left(\frac{r_{A,av}}{r_{B,av}}\right)}\right] \qquad (II)$$

   where $r_o$ is the Shannon ionic radius of oxide ion ($O^{2-}$), $r_{B,av}$ is the weighted average Shannon ionic radius of B and B', defined in formula (III),

   $$r_{B,Av} = z \cdot r_B + (1-z) \cdot r_{B'} \qquad (III)$$

   where $r_B$ is the Shannon ionic radius of B and $r_{B'}$ is the ionic radius of B', $n_{A,Av}$ is the weighted average oxidation state of A and A', defined in formula (IV),

   $$n_{A,Av} = [x \cdot n_A + (1-x) \cdot n_{A'}] \cdot y, \qquad (IV)$$

   where $n_A$ is the oxidation state of A and $n_{A'}$ is the oxidation state of A',
   $r_{A,Av}$ is the weighted average ionic radius of A and A', defined in formula (V),

   $$r_{A,Av} = [x \cdot r_A + (1-x) \cdot r_{A'}] \cdot y, \qquad (V)$$

   where $r_A$ is the Shannon ionic radius of A and $r_{A'}$ is the ionic radius of A',
   wherein the ceramic material is **characterized by** $1.67 \leq SF \leq 2.8$.

2. The electrode according to claim 1, wherein the ceramic material of formula (I) is uniformly dispersed on the surface of the second material.

3. The electrode according to claims 1 or 2, wherein the particles of the ceramic material are immobilized and partly encapsulated by the second material.

4. The electrode according to any of the preceding claims, wherein A is an element from the following list of elements: La, Ce, Gd, Pr, Ba; and wherein A' is an element from the following list of elements: Sr, Ca, Ba, Ce; and wherein B or B', independently, is an element from the following list of elements: Mn, Ni, Fe, Co, Ti, Cr.

5. The electrode according to any of the preceding claims, wherein y is in the range of 0.6 to 0.98, and preferably in the range of 0.75 and 0.98.

6. The electrode according to any of the preceding claims, wherein the average particle size of the ceramic material of formula (I) is between 10 nm and 300 nm and preferably between 20 nm and 200 nm.

7. The electrode according to any of the preceding claims, wherein the ceramic material of formula (I) has a perovskite crystal structure.

8. The electrode according to any of the preceding claims, wherein the electrode overpotential towards oxygen evolution reaction is less than or equal to 400 millivolts at a current density of 1 mA/cm$^2$, when the oxygen evolution reaction is carried out using a rotating disk electrode at a rotation rate of 1500 rpm in 20-35 weight% KOH and at a temperature of 75-85 degrees Celsius.

9. The electrode according to any of the preceding claims, wherein the ceramic material of formula (I) is phase-stable for 100 hours in 6 M KOH at 80 degrees Celsius.

10. The electrode according to any of the preceding claims, where $1.9 \leq SF \leq 2.6$.

11. An alkaline electrolysis stack comprising at least one electrode according to any of the preceding claims.

12. A method for the electrolysis of water in alkaline conditions using the alkaline electrolysis stack according to claim 11.

**Patentansprüche**

1. Elektrode, geeignet für die Durchführung einer Sauerstoffentwicklungsreaktion bei der Elektrolyse von Wasser in basischen Bedingungen, wobei die Elektrode aus den folgenden Bestandteilen besteht:

   a. einem keramischen Material mit der Formel (I)

$$[(A_x)A'_{(1-x)}]_y B_z B'_{(1-z)}O_{3-\delta} \qquad (I),$$

   wobei A und A' unabhängig voneinander aus einem Metall aus seltener Erde oder basischem Erdmetall bestehen, x im Bereich 0 bis 1 liegt, y die A-seitige Belegung ist und im Bereich 0,5 bis 0,99 liegt, B und B' unabhängig voneinander ein Übergangsmetall sind, z im Bereich 0 bis 1 liegt, O Sauerstoff und $\delta$ die Nichtstöchiometrie des Sauerstoffs ist, die im Bereich -1 bis 1 liegt, sowie
   b. einem zweiten Material aus metallischem Ni, einer metallischen Legierung aus Fe und Ni, oder einem Hydroxid aus Ni und Fe;
   wobei der Stabilitätsfaktor (SF) des keramischen Materials in Formel (II) definiert ist,

$$SF = \frac{r_O \cdot \frac{3-\delta}{3}}{r_{B,av}} - n_{A,Av}\left[n_{A,Av} - \frac{r_{A,av}/r_{B,av}}{ln\left(\frac{r_{A,av}}{r_{B,av}}\right)}\right] \qquad (II),$$

   in der $r_O$ der Ionenradius nach Shannon des Sauerstoffions ($O^{2-}$) ist, $r_{B,av}$ der gewichtete Mittelwert des Ionenradius nach Shannon von B und B' wie in Formel (III) definiert ist,

$$r_{B,Av} = z \cdot r_B + (1-z) \cdot r_{B'} \qquad (III),$$

in der $r_B$ der Ionenradius nach Shannon von B und $r_{B'}$ der Ionenradius von B', $n_{A,Av}$ der gewichtete Mittelwert des Oxidationszustands von A und A', wie in Formel (IV) definiert ist,

$$n_{A,Av} = [x \cdot n_A + (1-x) \cdot n_{A'}] \cdot y, \qquad (IV)$$

in der $n_A$ der Oxidationszustand von A und $n_A$ der Oxidationszustand von A' und $r_{A,Av}$ der gewichtete Mittelwert des Ionenradius von A und A' wie in Formel (V) definiert ist,

$$r_{A,Av} = [x \cdot r_A + (1-x) \cdot r_{A'}] \cdot y, \qquad (V)$$

in der $r_A$ der Ionenradius von Shannon von A und $r_{A'}$ der Ionenradius von A' ist,
wobei das keramische Material durch $1{,}67 \leq SF \leq 2{,}8$ charakterisiert ist.

2. Elektrode gemäß Anspruch 1, wobei das keramische Material von Formel (I) gleichmäßig auf der Oberfläche des zweiten Materials verteilt ist.

3. Elektrode gemäß Anspruch 1 und 2, wobei die Partikel des keramischen Materials durch das zweite Material bewegungsunfähig gemacht und teilweise eingekapselt werden.

4. Elektrode gemäß eines der vorangegangenen Ansprüche, wobei A ein Element aus der folgenden Liste von Elementen ist: La, Ce, Gd, Pr, Ba; und wobei A' ein Element aus der folgenden Liste von Elementen ist: Sr, Ca, Ba, Ce; und wobei B oder B' unabhängig voneinander Elemente aus der Liste der folgenden Elemente sind: Mn, Ni, Fe, Co, Ti, Cr.

5. Elektrode gemäß eines der vorangegangenen Ansprüche, wobei y im Bereich 0,6 bis 0,98 und bevorzugt im Bereich 0,75 und 0,98 liegt.

6. Elektrode gemäß einem der vorangegangenen Ansprüche, wobei die durchschnittliche Partikelgröße des keramischen Materials von Formel (I) zwischen 10 nm und 300 nm und bevorzugt zwischen 20 nm und 200 nm liegt.

7. Elektrode gemäß einem der vorangegangenen Ansprüche, wobei das keramische Material von Formel (I) eine kristalline Perowskitstruktur aufweist.

8. Elektrode gemäß einem der vorangegangenen Ansprüche, wobei die Elektrodenüberspannung gegenüber der Sauerstoffentwicklungsreaktion geringer als oder gleich 400 Millivolt bei einer Stromdichte von 1 mA/cm$^2$ ist, wenn die Sauerstoffentwicklungsreaktion mittels rotierender Scheibenelektrode bei einer Geschwindigkeit von 1.500 U/Min. In 20-35 % (volumengewichtet) KOH und bei einer Temperatur von 75-85 Grad Celsius durchgeführt wird.

9. Elektrode gemäß einem der vorangegangenen Ansprüche, wobei das keramische Material in Formel (I) phasenstabil für 100 Stunden in 6 mol KOH bei 80 Grad Celsius ist.

10. Elektrode gemäß einem der vorangegangenen Ansprüche, wobei $1{,}9 \leq SF \leq 2{,}6$ gilt.

11. Basisches Elektrolyse-Stack, bestehend aus mindestens einer Elektrode gemäß einem der vorangegangenen Ansprüchen.

12. Verfahren zur Elektrolyse von Wasser in basischen Bedingungen mittels basischem Elektrolyse-Stack gemäß Anspruch 11.

**Revendications**

1. Electrode apte à réaliser la réaction de dégagement d'oxygène dans l'électrolyse de l'eau en conditions alcalines, l'électrode comprenant

a. Un matériau céramique de formule (I)

$$[(A_x)A'_{(1-x)}]_y B_z B'_{(1-z)}O_{3-\delta} \qquad (I)$$

où A et A', indépendamment l'un de l'autre, sont des terres rares ou des métaux alcalino-terreux, x est compris entre 0 et 1, y est l'occupation du site A et est compris entre 0,5 et 0,99, B et B', indépendamment l'un de l'autre, sont des métaux de transition, z est compris entre 0 et 1, O est l'oxygène, et $\delta$ est la non-stoechiométrie de l'oxygène et est compris entre - 1 et 1, et
b. un second matériau constitué de Ni métallique, d'un alliage métallique de Fe et de Ni ou d'un hydroxyde de Ni et de Fe;
dans laquelle le facteur de stabilité (SF) du matériau céramique est défini par la formule suivante (II),

$$SF = \frac{r_O \cdot \frac{3-\delta}{3}}{r_{B,av}} - n_{A,Av}\left[n_{A,Av} - \frac{r_{A,av}/r_{B,av}}{\ln\left(\frac{r_{A,av}}{r_{B,av}}\right)}\right] \qquad (II)$$

où rO est le rayon ionique de Shannon de l'ion oxyde (02-), rB,av est le rayon ionique de Shannon moyen pondéré de B et B', défini dans la formule suivante (III),

$$r_{B,Av} = z \cdot r_B + (1-z) \cdot r_{B'} \qquad (III)$$

où rB est le rayon ionique de Shannon de B et rB' est le rayon ionique de B', nA,Av est l'état d'oxydation moyen pondéré de A et A', défini dans la formule suivante (IV),

$$n_{A,Av} = [x \cdot n_A + (1-x) \cdot n_{A'}] \cdot y, \qquad (IV)$$

où nA est l'état d'oxydation de A et nA' est l'état d'oxydation de A',
rA,Av est le rayon ionique moyen pondéré de A et A', défini par la formule suivante (V),

$$r_{A,Av} = [x \cdot r_A + (1-x) \cdot r_{A'}] \cdot y, \qquad (V)$$

où rA est le rayon ionique de Shannon de A et rA' est le rayon ionique de A',
dans lequel le matériau céramique est **caractérisé par** $1,67 \leq SF \leq 2,8$.

2. L'Électrode selon la revendication 1, dans laquelle le matériau céramique de formule (I) est uniformément dispersé sur la surface du second matériau.

3. L'électrode selon les revendications 1 ou 2, dans laquelle les particules du matériau céramique sont immobilisées et partiellement encapsulées par le second matériau.

4. L'électrode selon l'une des revendications précédentes, dans laquelle A est un élément de la liste suivante : La, Ce, Gd, Pr, Ba : La, Ce, Gd, Pr, Ba ; et dans laquelle A' est un élément de la liste suivante d'éléments : Sr, Ca, Ba, Ce ; et dans lequel B ou B', indépendamment, est un élément de la liste suivante : Mn, Ni, Fe, Co, Ti, Cr.

5. L'électrode selon l'une des revendications précédentes, dans laquelle y est compris entre 0,6 et 0,98, et de préférence entre 0,75 et 0,98.

6. L'électrode selon l'une des revendications précédentes, dans laquelle la taille moyenne des particules du matériau céramique de formule (I) est comprise entre 10 nm et 300 nm et, de préférence, entre 20 nm et 200 nm.

7. Électrode selon l'une des revendications précédentes, dans laquelle le matériau céramique de formule (I) a une structure cristalline de pérovskite.

**8.** L'électrode selon l'une quelconque des revendications précédentes, dans laquelle le surpotentiel de l'électrode vis-à-vis de la réaction de dégagement d'oxygène est inférieur ou égal à 400 millivolts à une densité de courant de 1 mA/cm2, lorsque la réaction de dégagement d'oxygène est effectuée à l'aide d'une électrode à disque rotatif à une vitesse de rotation de 1500 tours/minute dans 20-35 % en poids de KOH et à une température de 75-85 degrés Celsius.

**9.** L'électrode selon l'une des revendications précédentes, dans laquelle le matériau céramique de formule (I) est stable en phase pendant 100 heures dans du KOH 6 M à 80 degrés Celsius.

**10.** L'électrode selon l'une quelconque des revendications précédentes, où $1{,}9 \leq SF \leq 2{,}6$..

**11.** Cheminée d'électrolyse alcaline comprenant au moins une électrode selon l'une quelconque des revendications précédentes.

**12.** Procédé d'électrolyse de l'eau en milieu alcalin utilisant la pile d'électrolyse alcaline selon la revendication 11.

Fig. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013012965 A1
- US 20160289850 A1
- EP 3587622 A1
- EP 3444383 B1

**Non-patent literature cited in the description**

- **RISCH et al.** *J. Phys. Chem. C,* 2013, vol. 117, 8628
- **R. D. SHANNON.** *Acta Crystallogr. A,* 1976, vol. 32, 751-767
- **MA et al.** *Journal of Alloy and Compounds,* 2021, vol. 854, 157154
- **POZNYAK et al.** *Journal of Solid State Electrochemistry,* 2008, vol. 12, 15-30